# EUROPEAN PATENT APPLICATION

(11) **EP 3 399 411 A1**
(43) Date of publication of application: **07.11.2018**
(21) Application number: 17169453.2
(22) Date of filing: 04.05.2017
(51) Int. Cl.: G06F 9/445, G06F 11/14

(54) **METHOD AND SYSTEM FOR FAULT HANDLING DURING REMOTE INSTALLATION OF SOFTWARE IN A VEHICLE**

(71) Applicant: Volvo Car Corporation, 40 531 Göteborg (SE)
(72) Inventor: Persson, Mr. Magnus, 47161 Myggenäs (SE); Sandbling, Eric, 43146 Mölndal (SE)
(74) Representative: Kransell & Wennborg KB

(57) **Abstract**

There is provided a method for remote installation of software in a vehicle. The method comprises initializing (200) an installation sequence comprising at least one installation sub-sequence (202A-B), the at least one sub-sequence comprising at least one action (204A-B); and during installation: if the action fails, retrying (206) the action; if the action fails after retrying the action, retrying (208) the installation sub-sequence comprising the action; and if the action fails after retrying the installation sub-sequence comprising the action, retrying (210) the installation sequence comprising the installation sub-sequence. There is also provided a system (100) for performing the method.

## Description

### Field of the Invention

The present invention relates to a method and a system for remote installation of software in a vehicle. In particular, the present invention relates to a method and a system for handling and reporting failures occurring during remote installation of software in a vehicle.

### Background of the Invention

As more and more of the functionality in a vehicle is controlled by software, there is an increasing need for efficiently updating the vehicle software.

Traditionally, software upgrades have been scheduled and performed by a service technician in a workshop or at a service center where the software installation process could be manually supervised. Accordingly, if the software was not successfully installed, the service technician could diagnose the installation error and redo the installation. Thereby, it could be ensured that the vehicle was only operated with the correct software version.

Moreover, the need to ensure that the correct software is installed in the vehicle only increases as additional vehicle features are introduced. It is also important to ensure the compatibility of various vehicle systems. For example, active safety systems, driver assistance systems and self driving vehicles rely on the software to keep the vehicle passengers safe. At the same time, to simplify for the vehicle owner, it is desirable to provide over-the-air software updates to the vehicle from a remote location via a wireless connection to eliminate the need for the vehicle to be at a service center to perform the upgrade.

However, an important issue to consider when providing over-the-air software updates is to ensure that the software is installed correctly and that all functionality of the vehicle is maintained.

One solution to the above issue is to use a methodology where a dual memory-bank is used in the vehicle, so that the software is installed in one memory-bank, and where the old software version is kept in the other memory bank, where the updated memory bank is subsequently only used if the software installation is successful. Thereby, if a software installation is not successful, the old software version can still be used. However, to update the software, it may be needed to take the vehicle to a service center or workshop for diagnostics and manual installation of the software, or for a technician to come to the vehicle to resolve the problem. Moreover, the use of dual memory-banks is both costly and complicated.

Accordingly, it is desirable to provide an improved the over-the-air software installation process.

### Summary

In view of above-mentioned and other drawbacks of the prior art, it is an object of the present invention to provide an improved method and system for over-the-air installation of software in a vehicle. In particular, it is an object of the present invention to provide a fault handling strategy for over-the-air software installation in a vehicle.

According a first aspect of the invention, there is provided a method for remote installation of software in a vehicle. The method comprises initializing an installation sequence comprising at least one installation sub-sequence, the at least one sub-sequence comprising at least one action; and during installation: if the action fails, retrying the action; if the action fails after retrying the action, retrying the installation sub-sequence comprising the action; and if the action fails after retrying the installation sub-sequence comprising the action, retrying the installation sequence comprising the installation sub-sequence.

In the present context, an installation sequence can be considered to comprise the entire installation required for updating the selected vehicle functionality. An installation sequence may comprise a plurality of subsequences, and each sub-sequence may comprise a plurality of actions to be performed. Each action may also be defined by a number of features describing the action and how the action is to be performed. Moreover, an action is a command comprising specific data addressing a specific control unit. An action may for example be "erase memory", "write data to memory", and "validate written data", where the functionality of the specific actions are determined by the content of the written data. An action may thereby be seen as a command issued during the installation process. "If" may throughout the disclosure refer to "when" and/or "provided that".

The present invention is based on the realization that the installation sequence advantageously may be divided into sub-sequences which in turn comprises installation actions in order to divide the overall installation process into smaller steps, thereby facilitating efficient fault handling. The installation sequence is divided into three hierarchical levels of retries to increase the chances of a successful installation. A reason for a failed action may be that a control unit or memory storage to be updated is busy with another process at the first installation attempt. In that case, retrying the action may solve the problem since the time between tries may have been sufficient for the previously blocking process to complete. An action may also fail due to a message being dropped in a gateway, due to a failed write operation in a control unit memory or due to bad signal quality, in which case a retry of the action may be successful.

According to one embodiment of the invention, retrying the action may advantageously comprise retrying the action a predetermined number of times. Thereby, by limiting the number of retries, the installation sequence is prevented from getting stuck if one action repeatedly fails to install correctly. The same principle is applicable for the sub-sequence, where the sub-sequence is retried a predetermined number of times. Moreover, the retrials can be performed automatically in the vehicle without the involvement of a remote server or of an operator, thereby providing an automatic and autonomous fault handling strategy. The control unit may observe that an expected response is not received within a predetermined response time, taking that as an indication of a failure to perform the action and ordering a retry.

According to one embodiment of the invention, retrying an action may comprise modifying a feature of the action before retrying. Thereby, if it is one specific action which is causing the problem preventing the installation process from proceeding, the action can be simplified by modifying a feature so that the action can be performed. A feature of the action may for example describe a timeout setting for various expected responses from control units having received a command, or a speed of data communication for the action. Accordingly, the action can be modified and simplified by increasing the timeout and by reducing the communication speed, thereby reducing the complexity of the action and increasing the chance that the action can be performed successfully.

According to one embodiment of the invention, a feature to modify in a sub-sequence can be selected based on a type of failure. If for example an expected response is not received, a timeout can be increased.

According to one embodiment of the invention, the installation sequence may comprise performing a plurality of installation sub-sequences in parallel, and, if an action fails, reducing the parallelism of the installation sequence. The installation sequence may for example request that several different control units operate in parallel, which for example may cause collisions on communication buses or other issues. Reducing the parallelism thereby means that fewer actions or sub-sequences are running in parallel, i.e. that fewer vehicle control units are updated in parallel, thereby decreasing the complexity of the installation procedure. Accordingly, reducing parallelism may solve problems relating to the capacity of a communication bus and allow the installation process to proceed.

According to one embodiment of the invention, the installation sequence may further comprise, if an action fails, increasing a timeout for subsequent actions in an installation sub-sequence. Thereby, the action may be able to complete successfully given additional time.

Accordingly, the complexity of the installation sequence can be reduced by reducing the complexity of actions, reducing parallelism and increasing time between actions or by a combination of the described measures, in order to resolve problems occurring during the installation sequence. Thereby, a general fault handling strategy is provided by which it is possible to proceed with the installation sequence without specific knowledge of the cause of the failure.

According to one embodiment of the invention, the method may further comprise, if the installation sequence fails, re-booting a vehicle system on which the installation is attempted. Accordingly, the vehicle system, which may comprise one or more control units, is restarted and the complete installation sequence can be attempted again after re-booting.

According to one embodiment of the invention, the method may further comprise providing a report to a remote server, the report comprising information describing failures in the installation sequence specifying a time of each failure and a type of each failure. If a failure is identified in the installation, the entire installation sequence is cancelled to prevent that only some of the control units are updated, which for example may cause problems due to incompatibility between different software versions.

According to one embodiment of the invention, the method may further comprise defining a failure in terms of a level of criticality. If several failures occur in an installation sequence, the overall system status should correspond to the highest level of criticality of the observed failures. In an example embodiment, a level of criticality can be FAILED, meaning that no memory has been altered in any of the control units, and from a user perspective the installation is aborted. Another, higher level of criticality can be FAILED CRITICAL, meaning that some of the memory has been altered in a control unit in which the system functionality cannot be guaranteed. It is also possible that some of the control units have been updated and some not, in which case a software compatibility between control units can not be guaranteed.

According to one embodiment of the invention, the method may further comprise, after completing the installation, providing an installation summary comprising:
- the status for each control unit and data file involved in the installation;
- the total number of retries during the installation; and
- the total installation time for each data file.

In case of failure of the installation, additional information describing the nature of the failure is included in the installation summary.

Thereby, a complete record of the installation can be provided to a remote server for analysis and review. In this way, if an installation fails or if there are failed components in the installation, it may be possible to determine the cause of the failure.

According to a second aspect of the invention, there is provided a system for remote installation of a program in a vehicle. The system comprises a communication unit for communicating with a remote server, at least one vehicle functionality control unit; and a software installation control unit in a vehicle, where the software installation control unit is configured to: initialize an installation sequence comprising at least one installation sub-sequence, the at least one sub-sequence comprising at least one action; and during installation: if the action fails, retry the action, if the action fails after retrying the action, retry the installation sub-sequence comprising the action; and if the action fails after retrying the installation sub-sequence comprising the action, retry the installation sequence comprising the installation sub-sequence.

According to one embodiment of the invention, in a system comprising a plurality of vehicle functionality control units, the software installation control unit may further be configured to perform the installation sequence in parallel on the plurality of vehicle functionality control units, and if an action fails, reduce the number of vehicle functionality control units on which the installation sequence is performed simultaneously. Accordingly, the complexity can be reduced by reducing the parallelism of the installation sequence, thereby improving the chances that the installation can be performed without failure.

Effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a vehicle comprising a system according to an embodiment of the invention;
Fig. 2 is a flow chart outlining the general steps of a method according to an embodiment of the invention;
Fig. 3 is a flow chart outlining features of a method according to an embodiment of the invention; and
Fig. 4 schematically illustrates a vehicle comprising a system according to an embodiment of the invention.

### Detailed Description of Example Embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

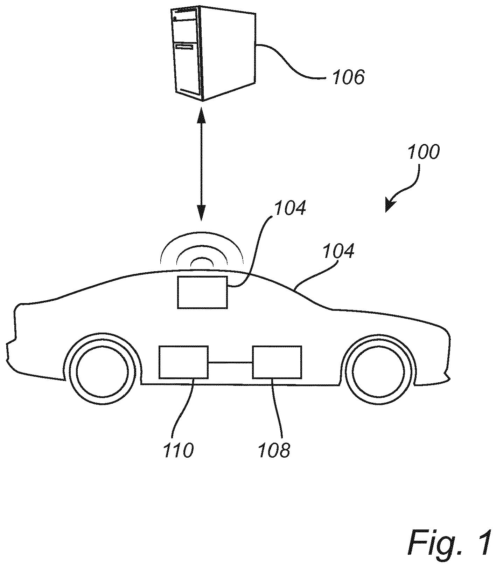

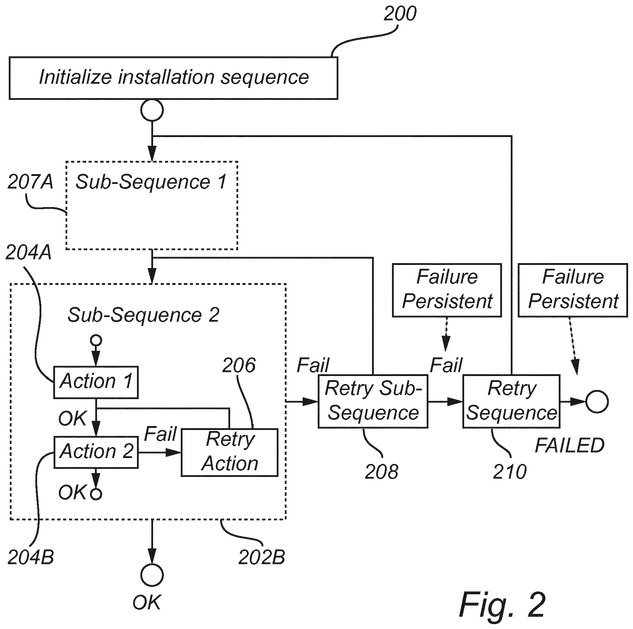

Fig. 1 schematically illustrates a system 100 for remote installation of software in a vehicle 102 according to an embodiment of the invention. The general steps of a method for remote installation of software in a vehicle 102 are outlined in the flow chart of Fig. 2. In the following, various embodiments of the invention will be described with reference to the system of Fig. 1 and to the method of Fig. 2.

The system 100 comprises a communication unit 104 for communicating with a remote server 106, at least one vehicle functionality control unit 108 and a software installation control unit 110 in the vehicle 102. The control unit 108, 110 may include a microprocessor, microcontroller, programmable digital signal processor or another programmable device. The control unit 108, 110 may also, or instead, include an application specific integrated circuit, a programmable gate array or programmable array logic, a programmable logic device, or a digital signal processor. Where the control unit 108, 110 includes a programmable device such as the microprocessor, microcontroller or programmable digital signal processor mentioned above, the processor may further include computer executable code that controls operation of the programmable device. The control unit 108, 110 may furthermore be a dedicated unit for software installation, or the functionality of the control unit 108, 110 may be incorporated in a general purpose control unit. The software installation control unit 110 and the vehicle functionality control units 108 may also be referred to as an electronic and/or engine control unit (ECU), or engine control module (ECM).

The software installation control unit 110 is configured to perform the method according to various embodiments of the invention. In particular, the software installation control unit 110 is responsible for performing the installation, i.e. for triggering the actions in the correct order and issuing the corresponding commands. Accordingly, the installation control unit 110 communicates with all of the vehicle functionality control units 108 involved in the installation process.

The method comprises initializing 200 an installation sequence comprising at least one installation sub-sequence 202A-B, wherein each sub-sequence comprises at least one action 204A-B. During installation, if the action 204B fails, the action is retried 206. If the action 204B fails also after retrying the action 204B, the installation sub-sequence 202B comprising the action 204B is retried 208. If the failure to perform the action 204B persists also after retrying the installation sub-sequence 202B, the entire installation sequence comprising the failed installation sub-sequence 202B is retried 210. If the failure to complete the action 204B and/or the sub-sequence 202B persists also after retrying the entire installation sequence, the installation is classified as failed.

It should be noted that the above description is simplified for clarity, and that an installation sequence in practice typically contains a large number of sub-sequences, with a large number of actions in each sub sequence.

Retrying an action or retrying a sub-sequence may comprise retrying the action or sub-sequence a predetermined number of times. The predetermined number of retries is used to avoid that the installation sequence gets stuck retrying a certain action or sub-sequence. The number of retries can of course be set arbitrarily. In an exemplifying embodiment, the predetermined number of retries is set to three. It is also possible that the number of retries is different for different types of failures and for different actions or sub-sequences of the installation sequence.

An action can be defined by a number of features, describing how the action is performed. The features may for example describe a timeout and a data communication speed of the action. The timeout is the time to wait for an event/request or the like to complete, and the data communication speed defines the data speed to use on a communication bus of the vehicle.

A subsequence may also be described by features such as parallelism, describing how many simultaneous actions should be performed.

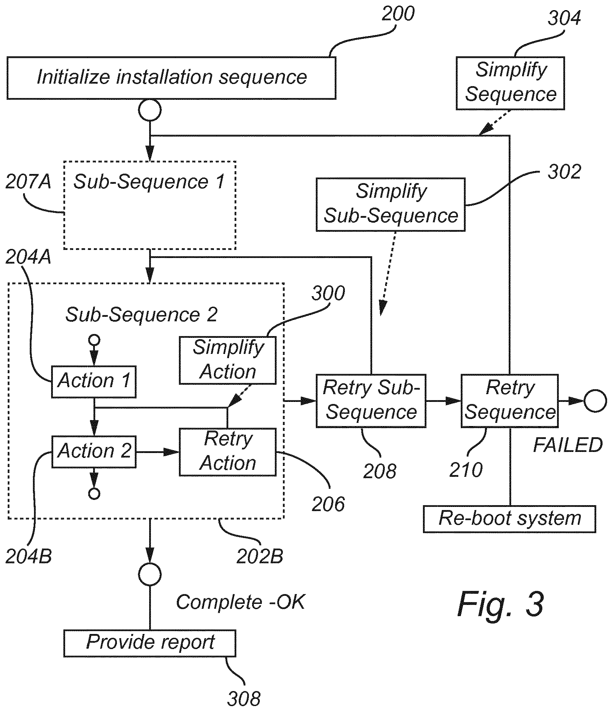

According to an embodiment of the invention schematically illustrated by the flow chart of Fig. 3, the method may comprise modifying and simplifying a feature of an action before retrying the action, and the same strategy of modifying and simplifying the installation can be employed for a failed sub-sequence and for the entire installation sequence.

In an example embodiment, the timeout of an expected response from the action can be increased, or the number of parallel actions in a sub-sequence can be decreased. A first sub-sequence of an installation process may typically comprise setting all of the involved control units in programming mode, which is done in parallel on a plurality of control units, thereby involving a plurality of parallel actions.

Accordingly, the method as described by Fig. 3 may comprise simplifying an action 300, simplifying a sub-sequence 302, and/or simplifying the installation sequence 304. Thereby, each level of retry is associated with removal of features, and each level of retry is also associated with a maximum number of retries. If the retry of the entire installation sequence subsequently fails after performing the described simplifications and after retrying a predetermined number of times, the entire installation is deemed to have failed.

Moreover, if the entire installation sequence fails, the vehicle system on which the installation is attempted may be re-booted 306 and the installation sequence attempted again.

The described method may advantageously comprise providing 308 a status report of the installation to a remote server 106. The status report may then comprise an installation summary comprising at least:
- the status for each control unit and data file involved in the installation;
- the total number of retries during the installation; and
- the total installation time for each data file.

If the installation fails, the installation summary may further comprise:
- a time of failure;
- identification of the control unit in which the failure occurred;
- identification of installation data file for which failure occurred;
- identification of a sub-sequence in which the failure occurred;
- identification of an action in which the failure occurred; and
- a failure message

Thereby, faults can be tracked on each retry level of the installation. The system status after an installation reflects the status of the failure with the highest level of criticality. The report may also include additional information and failure modes, such as "installation not started" and "features installed but not verified".

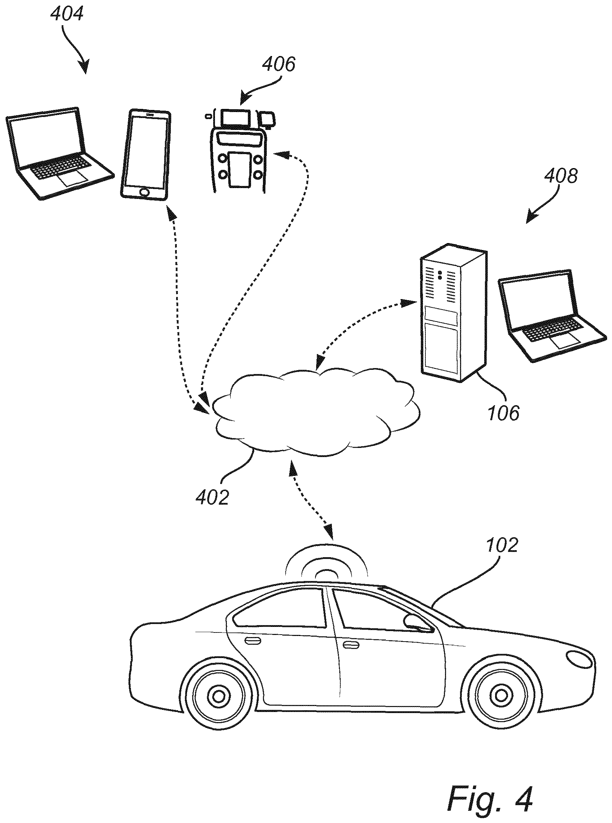

Fig. 4 schematically illustrates an example embodiment of a system for over-the-air installation, wherein the vehicle 102 communicates with external sources via a cloud environment 402. Here, the vehicle can communicate with a service center 404, with a vehicle interface 406, and/or with a vehicle manufacturer back-end facility 408, which may comprise the remote server 106 providing a software update package to the vehicle 102. When the installation is completed, the vehicle 102 can send an installation status (e.g. OK, or FAIL) to each of the connected sources.

In the above description, a method and system for over-the-air installation of software is provided, comprising three levels of retries, progressive countermeasures, and exception priority and traceability, thereby providing a robust installation method.

Even though the invention has been described with reference to specific exemplifying embodiments thereof, many different alterations, modifications and the like will become apparent for those skilled in the art. Also, it should be noted that parts of the method and system may be omitted, interchanged or arranged in various ways, the method and system yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for remote installation of software in a vehicle (102), the method comprising:
initializing (200) an installation sequence comprising at least one installation sub-sequence (202A-B), said at least one sub-sequence comprising at least one action (204A-B); and during installation:
if said action fails, retrying (206) said action;
if said action fails after retrying said action, retrying (208) said installation sub-sequence comprising said action; and
if said action fails after retrying said installation sub-sequence comprising the action, retrying (210) said installation sequence comprising said installation sub-sequence.

2. The method according to claim 1, wherein retrying said action comprises retrying said action a predetermined number of times.

3. The method according to claim 1 or 2, wherein retrying the sub-sequence comprises retrying the sub-sequence a predetermined number of times.

4. The method according to any one of the preceding claims, wherein retrying an action comprises modifying a feature of said action before retrying said action.

5. The method according to claim 4, wherein a feature to modify in an action is selected based on a type of failure.

6. The method according to any one of the preceding claims, wherein the installation sequence comprises performing a plurality of installation sub-sequences in parallel, and, if an action fails, reducing the parallelism of the installation sequence.

7. The method according to any one of the preceding claims, further comprising, if an action fails, increasing a timeout for subsequently performed actions in an installation sub-sequence.

8. The method according to any one of the preceding claims, further comprising, if said installation sequence fails, re-booting (306) a vehicle system on which the installation is attempted.

9. The method according to any one of the preceding claims, further comprising providing (308) a report to a remote server, the report comprising information describing failures in the installation sequence, specifying a time of each failure and a type of each failure.

10. The method according to any one of the preceding claims, further comprising defining a failure in terms of a level of criticality.

11. The method according to claim 9 or 10, further comprising providing a status report to a remote server (106), wherein the status of the vehicle system is the status representing the highest level of criticality encountered by the installation sequence.

12. The method according to any one of the preceding claims, further comprising, after completing the installation, providing an installation summary comprising:
- the status for each control unit and data file involved in the installation;
- the total number of retries during the installation; and
- the total installation time for each data file; and
in case of installation failure, the installation summary further comprises:
- a time of failure;
- identification of a control unit in which a failure occurred;
- identification of an installation data file for which a failure occurred;
- identification of a sub-sequence in which a failure occurred;
- identification of an action in which a failure occurred; and
- a failure message.

13. A system (100) for remote installation of software in a vehicle (102), the system comprising:
a communication unit (104) for communicating with a remote server (106);
at least one vehicle functionality control unit (108); and
a software installation control unit (110) in the vehicle configured to:
initialize an installation sequence comprising at least one installation sub-sequence, said at least one sub-sequence comprising at least one action; and during installation:
if said action fails, retry said action;
if said action fails after retrying said action, retry said installation sub-sequence comprising said action; and
if said action fails after retrying said installation sub-sequence comprising the action, retry said installation sequence comprising said installation sub-sequence.

14. The system according to claim 13, said system comprising a plurality of vehicle functionality control units, wherein said software installation control unit is further configured to:
perform said installation sequence in parallel on said plurality of vehicle functionality control units, and if an action fails, reduce the number of vehicle functionality control units on which the installation sequence is performed simultaneously.

15. A vehicle comprising a system according to claim 13 or 14.
